# EUROPEAN PATENT APPLICATION

(11) **EP 2 110 499 A2**
(43) Date of publication of application: **21.10.2009**
(21) Application number: 09157824.5
(22) Date of filing: 10.04.2009
(51) Int. Cl.: E05B 1/00

(54) **Coupling device for coupling a gripping member to a door or a window**

(30) Priority: 18.04.2008 IT RA20080015
(71) Applicant: Erreti S.R.L., 48010 Bagnara di Romagna (RA) (IT)
(72) Inventor: Avvanzini, Ugo, 48010 Bagnara di Romagna (RA) (IT)
(74) Representative: Regnault de la Mothe, Hélène

(57) **Abstract**

Coupling device (1) for coupling a gripping member (10) to a wall (P) at correspondence of a respective external face (S); the wall (P) presenting a third hole (F) with a given diameter, transverse to the face (S); the coupling device (1) comprising a first connecting member (30) (300) and a second connecting member (40) so shaped as mutually to cooperate and grip the wall (P); the first member (30) (300) presenting a head (32) (320); the second connecting member (40) presenting elongated shape, longitudinal extension greater than the diameter and transverse extension lower than the diameter in such a way as to cross freely the third hole (F) and to define an abutment for the head (32) (320) at the opposite side from the face (S).

## Description

The present invention relates to a coupling device. In particular, the present invention relates to a coupling device usable for coupling a gripping member to an external wall of a window or door.

### BACKGROUND TO THE INVENTION

In the sector of windows or doors provided with leaves coupled to the respective frames in a slidable or rotatable manner, around a vertical or horizontal axis, it is well known to apply handles which allow the actuation thereof. In the case of windows or doors produced through assembling of box-shaped elements, produced through extrusion of metallic or plastic material, normally called profiles, these handles are snap coupled or they are coupled through the use of threaded members based upon what is provided for by the respective designers. Generally, these handles present portions shaped so as to be built-in in adequately obtained slots or bases to be coupled to the profiles in a simply matching manner. In any case, the respective coupling is possible after that leaves and frames have been subjected to drilling or milling works, in order to obtain housings or the holes for threaded coupling members. It should be noted that the mounting method provided for by the designer requires for the works to be performed on a single face of an element composing the leaf and/or the frame, or on two faces reciprocally referred in a given manner. In some cases, when the element on which a handle must be installed presents its own face to be prepared for the installation accessible only by the side of a respective external face and the efforts for actuating the leaf are reduced, it is possible to use rivets and Therefore to install a respective handle by means of simple drilling operations on the face to which the handle shall be coupled. On the other hand, in the case in which the mass of the leaf to be actuated is great or in the case in which the operating conditions requires it, or simply the designer has decided so, it is necessary to use threaded members, i.e. pairs of screw and nut. In order to allow an adequate gripping of the handle to the leaf it is necessary to create the conditions necessary to access the face on which the fixing must be performed from both the parts, internal and external, in order to allow to retain the nut or the head of the screw by means of an adequate tool during the screwing phase.

Naturally, the description above also applies to all the hardware to be installed on box-shaped elements with closed section, obtained in a single piece, or for snap assembling or for other assembling.

It should be specify that it is not always possible to access in a simple manner the coupling threaded members of a handle or hardware from the inside and the outside, or that sometimes it should be preferable, in order to minimise the installation times or to minimise the numbers of operators required for the assembling, to operate on the leaf only from the side in which the handle must be installed. Naturally, when the forces involved are high, it is not possible to use rivets, and this is not therefore possible. However, it is known that the head of the nails which allow to obtain a counter head inside the profile is removed at the end of the fixing due to traction and that if the profile is closed it is necessary to leave this head inside the profile. In the case in which this is not possible or desired, it is necessary to provide for suitable discharge holes which, naturally, require time, contribute to increase the work time of the single tools, which deteriorate due to accessory operations of the fixing of the handle and similar, as well as they require the disinstallation of the leaf from the respective frame in order to facilitate the removal of the head of the nails of the rivets closed inside the profiles.

In view of the above description, the problem of connecting in a stable manner a handle or in general hardware to a profile of a leaf for windows or doors delimited by a closed section by means of a pair of the screw-nut type is currently unsolved, and represents an interesting challenge for the applicant in order to facilitate the installation of handles and more in general of components of group of windows or doors and therefore to minimise the manpower costs and to reduce the installation and maintenance times.

In view of the situation described above, it would be desirable to have available a coupling device for handles and hardware which, in addition to enabling to limit and possibly to overcome the typical drawbacks of the art illustrated above, could define a new standard for these types of products.

### SUMMARY OF THE PRESENT INVENTION

The present invention relates to a coupling device. In particular, the present invention relates to a coupling device usable for coupling a gripping member to an external wall of a window or door.

An object of the present invention is to provide a coupling device which allows the disadvantages described above to be solved, and which is suitable to satisfy a plurality of requirements that to date have still not been addressed, and therefore, suitable to represent a new and original source of economic interest and capable of modifying the current market of these products.

According to the present invention, a coupling device is provided, whose main characteristics will be described in at least one of the appended claims.

A further object of the present invention is to provide a coupling method which is validly usable for installing handles or similar hardware to walls which can be accessed only from the front and for their maintenance.

According to the present invention a coupling method is furthermore provided, which can be validly used for the installation of handles or similar hardware to walls which can be accessed only from the front, and for their maintenance; the main characteristics of the method will be described in at least one of the appended claims.

### BRIEF DESCRIPTION OF DRAWINGS

Further characteristics and advantages of the coupling device according to the present invention will be more apparent from the description below, set forth with reference to the accompanying drawings, which illustrate some nonlimiting examples of embodiment, in which identical or corresponding parts of the device are identified by the same reference numbers. In particular:
- figure 1 is a side elevation view rotated by 90° of a first preferred embodiment of the coupling device according to the present invention illustrated in a possible condition of use;
- figure 2 is a view in enlarged scale and with some parts removed for the sake of clarity of figure 1; and
- figure 3 is a plan view of a detail extracted from figure 2; and
- figure 4 is a side elevation view of a second preferred embodiment of figure 2 with some parts removed for the sake of clarity.

### DETAILED DESCRIPTION OF THE PRESENT INVENTION

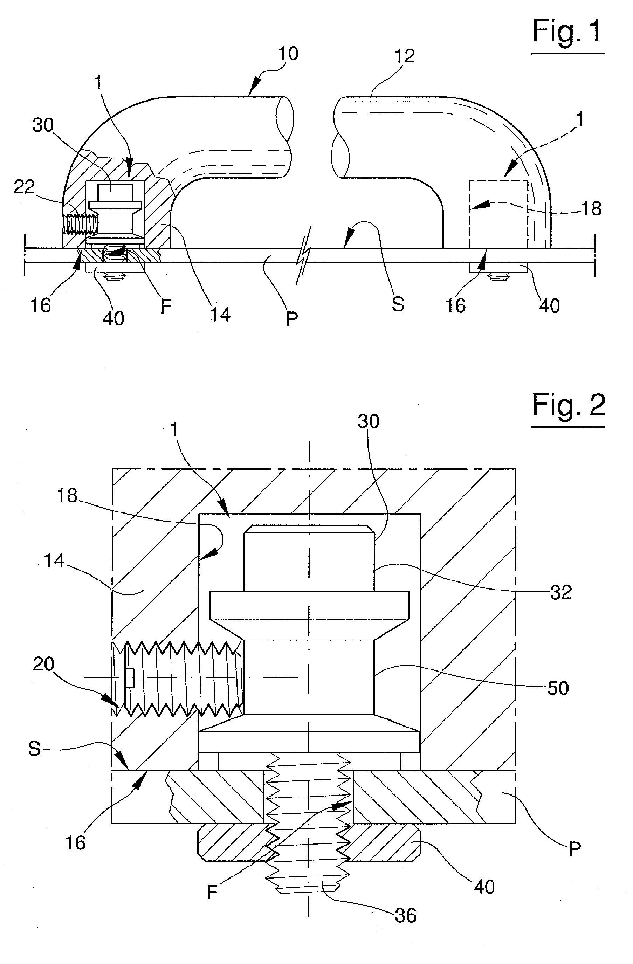

In figure 1, number 1 indicates, in its entirety, a coupling device which can be validly used for coupling a gripping member 10 to a wall P delimited at the top in figures 1 and 2 by a respective external face S and not accessible at the opposite side from said face S. It should be specified that this gripping member 10 presents a handgrip 12 and at least one base 14 which extends inferiorly from said handgrip 12 and is delimited at the bottom by a substantially plane surface 16 , shaped so as to couple in a substantially matching manner with the face S of the wall P. The gripping member 10 furthermore presents at least one first blind hole 18, transverse to the surface 16 and shaped so as to house a coupling device 1. The base 14 furthermore presents, in association with each first blind hole 18, a second hole 20 substantially parallel to the surface 16 which communicates with the first hole 18 and is suitable to house a dowel 22 suitable to connect in a rigid and selectively releasable manner the coupling device 1 to the base 14. The wall P presents a third hole F of given diameter, transverse to the base 14 in order to couple with the coupling device 1.

Always with reference to figure 1, and in greater detail in figure 2, the coupling device 1 comprises a first and a second coupling member 30 and 40 shaped so as to grip the wall P. The first member 30 presents a head 32 suitable to engage the first blind hole 18 and to determine the conditions under which the first member 30 can be hold inside this latter by means of a dowel 22. The second member 40 presents substantially rectangular elongated shape, with short sides 42 presenting extension lower than the diameter of the third hole F and long sides 44 presenting extension greater that the diameter of the third hole F, so as to freely cross this third hole F. Therefore, the second member 40 is suitable to define a fixed abutment for the head 32 on the wall P at the opposite side from the face S.

The second coupling member 40 furthermore presents at least one arris-wise edge 46 facing the head 32 in order to couple in a bearing-type manner with the wall P at the opposite side from the corresponding base 14. This edge 46 presents annular shape and extends along all the sides 42 and 44 of the second member 40 but, if deemed necessary, it can present lower extension and it can also be discontinuous, for example it can comprise only mutually opposite sides.

In view of the above description, each first hole 18 is delimited at the bottom in figure 1 by the surface 16 which, in use, delimits the base 14 from the side of the wall P and is shaped so as to be coupled in a substantially matching manner to the wall P.

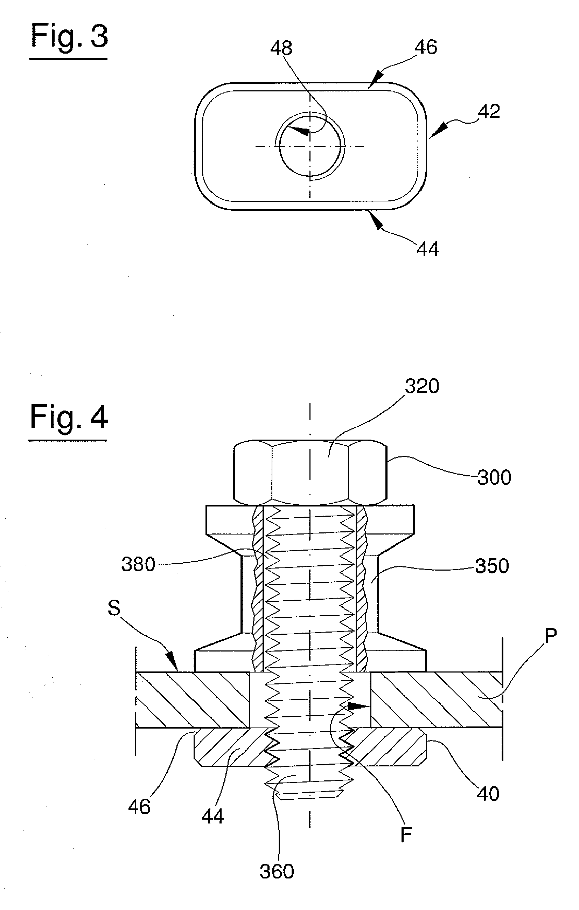

In particular, always with reference to figure 2, the first coupling member 30 presents a threaded portion 36 at opposite side from the head 32 couplable, in use, with the second coupling member 40 which, for this reason, presents centrally a threaded hole 48. In view of the above description, the head 32 must be shaped so as to be interfaced peripherally with the dowel 22. Naturally, the head 32 is shaped so as to be actuated in rotation through a tightening wrench and therefore it can present an external conformation of the hexagonal type as shown in figure 4, so as to be tightened by open-end spanners, or a hexagonal recessed impression to be tightened by means of an Allen screw.

Lastly, it is apparent that modifications and variants can be made to the device 1 described and illustrated herein, without however departing from the protective scope of the present invention.

For example, alternatively to what is described above, in order to simplify the production of the coupling device 1 and for reducing the costs thereof, it is possible to obtain the first member 300 in two parts as shown in figure 4. In particular, this first body 300 is axially symmetrical and comprises a standard screw 380 provided with a head 320 and with a threaded stem 360 which engages with clearance with a respective end portion, a spacer member 350 and ends inside the threaded hole 48 of the second member 40 so as to grip the wall P. The use of a spacer member 350 and of a standard screw 380 allows to reduce the work cycle of the coupling device 1 described with reference to figures 1 and 2 and to dedicate mechanical elements produced in the most appropriate materials to the different functions which in the device 1 must be performed to obtain the rigid connection of a bored base to a wall accessible only at the side of a respective external face S with costs surely lower than the costs for producing the device through a single first body 30. Therefore, each coupling device 1 can be interpreted as a sectional coupling member which can be fixed rigidly in a grip manner and in a freely releasable manner to a wall accessible only from a respective face and provided with an abutment element suitable to act in a bearing-type manner on the face not accessible of said wall.

In view of the above description, it should be easily understood that the device 1 allows to achieve the purposes described above and, in particular, to solve the problem of stably connecting a handle or in general hardware to a wall accessible only at the side which must couple with the surface 38, for example thanks to the fact of delimiting a closed section, or the fact of being hardly accessible at the opposite side from that of the installation, through a pair of the screw-nut type. This facilitates the installation of handles and more in general of components of groups of windows or doors, due to the fact that the inaccessibility of the face of the base wall is the rule in the most of cases which occur to an installer, who always has the need of minimising the manpower costs but reducing the installation and maintenance times maintaining however an high standard of the service performed.

Furthermore, it should be noted that through the use of the device 1 it is possible to define an anchoring member in association with a simply bored wall in order to couple a handle or a similar member using just one hand for inserting the member and for fixing it inside a hole.

Actually, the insertion of each device 1 in the respective third hole F of the wall P can be performed by gripping the head of the screw 30 with two fingers of a hand and starting the screwing with the same fingers, and lastly to complete it always with only one hand by using a wrench which can be coupled to the head 32.

## Claims

1. Coupling device (1) for coupling a gripping member (10) to a wall (P) at correspondence of a respective external face (S); said wall (P) presenting a third hole (F) of given diameter, transverse to said face (S) which can be engaged by said coupling device (1); said coupling device (1) comprising a first connecting member (30) (300) and a second connecting member (40) shaped so as to grip said wall (P); said first member (30) (300) presenting a head (32) (320) shaped in a given manner; said coupling device (1) being **characterised in that** said second connecting member (40) presents elongated shape, longitudinal extension greater than said diameter and transverse extension lower than said diameters in such a way as to cross freely said third hole (F) and to define an abutment for said head (32) (320) at the opposite side from said face (S).

2. A device according to claim 1, **characterised in that** said second connecting member (40) presents at least one arris-wise element (42) facing said head (32) (320) in order to couple in a bearing-type manner with said wall (P) at opposite side from the corresponding said face (S) by using only one hand.

3. A device according to claim 2, **characterised in that** to said first member (30) a threaded portion (3C)(360) is associated, suitable to engage in a helix manner said second member (40) in order to grip said wall (P).

4. A device according to claim 2, **characterised in that** said first connecting member (300) comprises a screw (380) provided with said head (320) and with a stem (360) suitable to couple in a helix manner with said second connecting member (40); a spacer member (350) being provided to house said stem (360) between said head (320) and said second connecting member (40) in such a way as to separate said head (320) and said second member (40) and to cooperate with said head (320) and said second connecting member (40) to grip said wall (P).
